# EUROPÄISCHE PATENTSCHRIFT

(11) **EP 3 964 069 B1**
(45) Veröffentlichungstag und Bekanntmachung des Hinweises auf die Patenterteilung: **23.08.2023**
(21) Anmeldenummer: 21174233.3
(22) Anmeldetag: 18.05.2021
(51) Int. Cl.: A21C 3/04, A21C 11/20

(54) **TEIG-BEHANDLUNGSEINHEIT, SOWIE VORRICHTUNG UND VERFAHREN ZUM BEHANDELN VON TEIG**
DOUGH TREATMENT UNIT, AND DEVICE AND METHOD FOR TREATING DOUGH
UNITÉ DE TRAITEMENT DE LA PÂTE, AINSI QUE DISPOSITIF ET PROCÉDÉ DE TRAITEMENT DE LA PÂTE

(30) Priorität: 20.05.2020 DE 102020113660
(43) Veröffentlichungstag der Anmeldung: 09.03.2022
(73) Patentinhaber: VEMAG Maschinenbau GmbH, 27283 Verden/Aller (DE)
(72) Erfinder: Kastell-Belke, Claus, 27299 Langwedel-Etelsen (DE); Siegmanski, Karsten, 27283 Verden (DE); Bretschneider, Frank Siegfried, 03042 Cottbus (DE)
(74) Vertreter: Eisenführ Speiser

(56) Entgegenhaltungen:
- CA-A1- 2 268 578
- DE-A1-102006 041 301
- US-A1- 2005 214 421
- US-A1- 2010 199 862
- US-A1- 2013 094 322

## Beschreibung

Die Erfindung bezieht sich auf eine Vorrichtung zum Verarbeiten von Teig gemäß dem Oberbegriff von Anspruch 1 sowie auf ein Verfahren zum Verarbeiten von Teig.

Im Stand der Technik sind Vorrichtungen bekannt, welche zum automatisierten Herstellen und Verarbeiten von Teigen für Brot oder dergleichen eingesetzt werden. Mittels solcher Vorrichtungen zum Verarbeiten kann der mitunter bereits fertige Teig weiterverarbeitet werden, insbesondere wird dieser in Portionen vorbestimmter Größe unterteilt

Die bekannten Verarbeitungsvorrichtungen weisen üblicherweise eine Füllmaschine zum Fördern bzw. Transportieren von Teig entlang einer Verarbeitungsstrecke auf. Die Füllmaschine umfasst üblicherweise einen Fülltrichter zum Aufnehmen von Teig als eine Zugabestelle für den Teig in Vorrichtung. Des Weiteren umfasst die Füllmaschine eine Förderpumpe mithilfe der der Teig vom Fülltrichter in Richtung einer Teig-Ausgabe bewegt wird. An der Teig-Ausgabe wird der Teig in Portionen vorbestimmter Größe ausgegeben.

Während des Förderns bzw. Transportieren des Teiges durch die Füllmaschine wird der Teig üblicherweise umgewälzt und gegebenenfalls fertig geknetet, wobei der Teig wechselnden Scher-Beanspruchungen ausgesetzt sein kann. Wegen der Umwälzungen oder Scher-Beanspruchungen beim Kneten kommt es zur Beeinflussung der Struktur des weiter zu verarbeitenden Teiges. Bei Teigen kann es zu einer Schädigung innerhalb der Teig-Struktur kommen. Die Folge ist häufig ein partiell geschädigter Glutenfilm, der eine verminderte und/oder unregelmäßige Gashaltung innerhalb des Teiges verursacht. Um einer möglichen Schädigung des Teiges entgegenzuwirken, werden die Teige nach dem Kneten den Prozess des Rundwirkens, Zwischengarens und Langwirkens wieder aufgearbeitet.

Aus DE 10 2011 083 356 A1 ist eine Vorrichtung zum Verarbeiten von Lebensmitteln bekannt, welche eine Fördereinrichtung zum Aufnehmen und zum Fördern eines Lebensmittels entlang eines Förderweges aufweist, wobei stromabwärts der Fördereinrichtung eine Behandlungskammer angeordnet ist, innerhalb der ein Knetmittel rotatorisch antreibbar angeordnet ist, das zum Nachbehandeln des Lebensmittels eingerichtet ist. Mithilfe des Knetmittels soll eine Aufarbeitung der geschädigten Teigstruktur vorgenommen, insbesondere die Klebernetzwirkung bzw. das Klebergerüst innerhalb der Glutenstruktur durch ein schonendes Nachkneten wiederhergestellt werden. Jedoch hat sich herausgestellt, dass diese Art der Nachbehandlung nicht immer zu der gewünschten Aufbereitung des Teiges führt.

US 2010/199862 A1 betrifft eine Vorrichtung zum Bearbeiten einer pastösen Masse, welche an eine Füllmaschine gekoppelt werden kann. Die Vorrichtung umfasst ein Gehäuse mit einem Einlass und einem Auslass. Zwischen Einlass und Auslass ist ein Aufnahmeraum für einen darin zu platzierenden Einsatz in Form einer Düse vorhanden. Der Düse kann ein Vorsatzgerät in Flussrichtung der pastösen Masse nachgeschaltet sein.

DE 10 2006 041 301 A1 zeigt eine Vorrichtung und ein Verfahren zur Extrusion viskoelastischer Massen, wie Teigwaren. Die Vorrichtung umfasst sich aufteilende Förderkanäle, wobei im Auslassbereich jedes Förderkanals eine Düse zum Ausgeben des geförderten Teiges angeordnet ist, durch die die Masse als kontinuierlicher Strang austritt.

Ausgehend von der obenstehenden Problematik lag der Erfindung die Aufgabe zugrunde, eine Vorrichtung sowie ein Verfahren zum Verarbeiten von Teig anzugeben, welche eine Steigerung der Produktqualität des Teiges auch bei unterschiedlicher Zusammensetzung ermöglichen. Ferner lag der Erfindung die Aufgabe zugrunde, den energetischen und technologischen Aufwand bei der Teigaufarbeitung bei zumindest gleichbleibender Produktqualität zu verringern.

Die Erfindung löst die zugrundeliegende Aufgabe bei einer Vorrichtung zum Verarbeiten von Teig, aufweisend eine Füllmaschine zum Fördern von Teig, die einen Fülltrichter zum Aufnehmen von Teig und eine Förderpumpe zum Fördern des Teiges umfasst, mit den Merkmalen nach Anspruch 1. Insbesondere ist die Füllmaschine mit einer stromabwärts von der Förderpumpe angeordneten Teig-Behandlungseinheit gemäß einer der vorstehend bevorzugten Ausführungsformen gekoppelt ist.

Erfindungsgemäß wird vorliegend der Ansatz verfolgt, statt einer herkömmlichen schonenden Nachbehandlung des bevorzugt zuvor mittels einer Förderschnecke geförderten Teiges zur Wiederherstellung der Klebenetzwirkung innerhalb der Glutenstruktur nunmehr diesen Teig einer kontrollierten Stressbeanspruchung zu unterziehen. Im Stand der Technik wird in der Fachwelt seit langem, vermutlich Jahrzenten der Ansatz verfolgt, dass eine Nachbehandlung zum Aufbereiten des Teiges nach einer Förderung, beispielsweise mittels einer Förderpumpe, nur sehr schonend erfolgen darf. Im Gegensatz zu dieser vorherrschenden Meinung verwendet die Erfindung eine den Strömungsquerschnitt für den zu fördernden Teig verringernde Düse zum Strukturieren/Restrukturieren des Teiges und schlägt weiter vor, dass stromabwärts von der Düse der Strömungsquerschnitt nach der Düse wieder erweitert ist. Überraschend hat sich entgegen in der Fachwelt bestehender (Vor-)Urteile gezeigt, dass mit einer an sich bekannten Düse eine weniger schonende Behandlung durchgeführt werden kann, die jedoch überraschend zu einer positiven Strukturierung oder Restrukturierung des Teiges führt. Nach einer substantiellen Umwälzung und Scherung in einem Füllstromteiler oder einer Förderpumpe mit einer sogenannten Förderkurve oder anderen Förderelementen oder einem Kneter wird erfindungsgemäß nunmehr eine Düse vorgeschlagen, mittels der ein One-Step-Verfahren bei die Nachbehandlung umgesetzt wird. Entgegen bestehender Vorurteile ist dadurch überraschend festgestellt worden, dass die Qualität des Teiges substantiell verbessert werden kann. D.h. der Teig wird erfindungsgemäß gezielt beansprucht und damit strukturell aufgearbeitet, womit eine chaotische Glutenstruktur in eine geordnete Glutenstruktur überführt wird. Statt einer schonenden Aufbereitung des Teiges erfolgt eine Strukturierung bzw. Restrukturierung der Teigstruktur, bei der strukturbildende Proteine großflächige Filme bilden und sich große Oberflächenspannungen im Material aufbauen können. Mit Durchströmen der Düse wird der Teig bevorzugt einem verhältnismäßig hohen Förderdruck von wenigstens 15 bar ausgesetzt. Bevorzugt liegt der Förderdruck in einem Bereich von etwa 15 bar bis ungefähr 50 bar. Bevorzugt ist in dem Behandlungsraum nur die Düse als feststehende bzw. nicht verstellbare Komponente des Teig-Strukturierungsabschnitt angeordnet. Der Behandlungsraum ist bevorzugt frei von sich bewegenden, insbesondere drehenden Bearbeitungswerkzeugen. Derartig restrukturierte Teige weisen im Vergleich zu herkömmlich aufbereitenden Teigen eine größere Anzahl von feinen Mikroporen auf, innerhalb denen Gärgase stärker gehalten werden können. Versuche haben gezeigt, dass die Glutenstruktur positiv beeinflusst wird, eine höhere Oberflächenspannung und eine feine Mikroporenverteilung erreicht werden kann. Damit ist im Ergebnis ein aus einem solch erfindungsgemäß restrukturierten Teig hergestelltes Gebäck feinporiger, wattiger und voluminöser. Ein solch hergestellter Teig überbietet die bekannten Gebäckeigenschaften hinsichtlich seines Gebäckvolumens, der Krumenstruktur und Textur deutlich.

Gemäß einer bevorzugten Weiterbildung der vorliegenden Erfindung ist die Düse in Abhängigkeit von der Qualität bzw. der Zusammensetzung des zu behandelnden Teiges angepasst, den den Behandlungsraum passierenden Teig zu strukturieren/restrukturiren. Mithilfe einer derartig in einem Behandlungsraum eingesetzten Düse, mittels der zunächst der Strömungsquerschnitt im Behandlungsraum verringert wird und der sich danach wieder vergrößert, erfolgt vorzugsweise eine mechanische Beanspruchung des Teiges in mehrere Richtungen gleichzeitig, bevorzugt eine dreidimensionale Beanspruchung, ohne dass die Schergrenze der Glutenfilme innerhalb des Teiges erreicht wird. Die Düse ist demnach derart konfiguriert, dass der zu strukturierende/restrukturierende Teig bis an seine Belastungsgrenze herangebracht wird. Nur so kann nach einer möglichen Schädigung des Teiges, durch beispielsweise eine zuvor erfolgte Förderung mittels einer Förderpumpe einer Füllmaschine innerhalb des Teiges die Ausbildung dünner, großflächiger Glutenfilme erreicht werden. Teige, die in mehrere Richtungen gleichzeitig mechanisch beansprucht werden, zeichnen sich durch wesentlich höhere Oberflächenspannungen und daraus hergestellte Gebäcke durch eine feine Porung und ein großes Volumen aus.

Eine Weiterbildung der erfindungsgemäßen Vorrichtung sieht vor, dass die Düse eine zentrale Durchtrittsöffnung aufweist, die in Strömungsrichtung des Teiges zumindest Abschnittsweise entlang des Teig-Strukturierungsabschnitts einen gleichbleibenden Strömungsquerschnitt hat. Mithilfe der zentralen Durchtrittsöffnung ist eine einfache und vor allem effiziente mechanische Beanspruchung des nachzubehandelnden Teiges erreicht, bei dem der Teig in mehrere Richtungen gleichzeitig beansprucht wird. Dabei ist die Verringerung im Strömungsquerschnitt an der zentralen Durchtrittsöffnung derart gewählt, dass die Schergrenze der Glutenstruktur innerhalb des zu behandelnden Teiges nicht erreicht wird. Mit dem Einhalten der Schergrenze wird eine weitere Beschädigung des nachzubehandelnden Teiges vermieden. Stattdessen erfolgt über die zentrale Durchtrittsöffnung eine Strukturierung/Restrukturierung des Teiges, mittels der die gewünschten rheologischen Eigenschaften "neu" hergestellt werden.

Vorzugsweise weist die zentrale Durchtrittsöffnung einen im Wesentlichen kreisförmigen Querschnitt mit einer Mittelachse auf, die koaxial zur Längsachse der Gehäusewandung des Gehäuses angeordnet ist, wobei vorzugsweise das Gehäuse eine im Wesentlichen rotationssymmetrische Form aufweist. Mit der koaxialen Anordnung der Mittenachse der Durchtrittsöffnung zur Längsachse der Gehäusewandung erfolgt im Behandlungsraum über den gesamten Umfang der Düse eine gleichmäßige Nachbehandlung und damit eine Strukturierung/Restrukturierung des durch die Düse geleiteten Teiges. In einer bevorzugten Ausgestaltung, in der die Durchtrittsöffnung der Düse einen kreisförmigen Querschnitt hat und die Gehäusewandung als eine Art zylindrisches Rohr ausgebildet ist, hat bei einer koaxialen Anordnung die zentrale Durchtrittsöffnung über ihren gesamten Umfang in radialer Richtung einen etwa gleichmäßigen Abstand zur Gehäusewandung des verbleibenden Behandlungsraumes stromauf- und stromabwärts der Düse.

Bevorzugt weist die Düse eine Durchtrittsöffnung mit einem Durchmesser auf, der zum Durchmesser der Gehäusewandung des Teigstrukturierungsabschnittes stromauf- und stromabwärts der Düse ein Verhältnis hat, das im Bereich von ungefähr 1:3 bis etwa 1:12 liegt. Damit ist in Abhängigkeit von den Eigenschaften des zu behandelnden Teiges eine ausreichend große mechanische Beanspruchung in bevorzugt mehrere Richtungen gleichzeitig bewirkt, die eine Strukturierung/Restrukturierung des zu behandelnden Teiges sicherstellen. Zudem ist innerhalb des angegebenen Bereiches der Querschnittsverringerung gewährleistet, dass die Schergrenze der Glutenstruktur innerhalb des zu behandelnden Teiges nicht erreicht wird.

Vorzugsweise weist der Teig-Strukturierungsabschnitt stromaufwärts der Durchtrittsöffnung einen sich in Strömungsrichtung kontinuierlich verringernden Strömungsquerschnitt auf. Mit dem sich kontinuierlich verringernden Querschnitt erfolgt bevorzugt eine gleichmäßige mechanische dreidimensionale Beanspruchung des Teiges für die vorzunehmende Strukturierung/Restrukturierung des Teiges. Zudem ist durch die kontinuierliche Querschnittsverringerung eine sprunghafte Umlenkung des Teiges im Strukturierungsabschnitt und damit eine Überlastung der Glutenstruktur im Teig bis an dessen Schergrenze vermieden.

In einer bevorzugten Ausgestaltung der erfindungsgemäßen Vorrichtung ist der sich kontinuierlich in Strömungsrichtung verringernde Strömungsquerschnitt als ein sich konisch verjüngender Eintrittskegel ausgebildet. Dadurch ist die gleichmäßige mechanische Beanspruchung des Teiges während des Strukturierens/Restrukturierens weiter verbessert. Bevorzugt weist die Düse im Behandlungsraum einen Eintritt bzw. eine Eintrittsöffnung und einen Austritt bzw. eine Austrittsöffnung innerhalb des Behandlungsraumes auf. Der Abschnitt zwischen der Eintrittsöffnung und der zentralen Durchtrittsöffnung für den Teig ist bevorzugt vollständig als sich konisch verjüngender Eintrittskegel ausgebildet.

Vorzugsweise weist der Eintrittskegel einen Kegelwinkel im Bereich von etwa 100° bis 120° auf. Innerhalb des angegebenen Bereiches wird der Teig ausreichend mechanisch beansprucht, ohne überbeansprucht zu werden. Der Kegelwinkel am Eintrittskegel der erfindungsgemäßen Düse kann in Abhängigkeit von der Art des zu bearbeitenden Teiges variieren.

Gemäß einer bevorzugten Weiterbildung der erfindungsgemäßen Vorrichtung weist der Teig-Strukturierungsabschnitt stromabwärts der zentralen Durchtrittsöffnung einen sich in Strömungsrichtung kontinuierlich wieder erweiternden Strömungsquerschnitt auf. An die sich im Eintrittsbereich der Düse erzeugte Druckerhöhung, wegen der Verringerung des Strömungsquerschnitts, schließt sich eine Entspannungsphase an, mittels dem der an dem Teig vorzunehmende Strukturierungs-/Restrukturierungsprozess erst abgeschlossen wird. Durch die durchlaufene, kontinuierliche Entspannungsphase, nach Passieren der zentralen Durchtrittsöffnung, ist das Ausbilden dünner, großflächiger Glutenfilme innerhalb des zu behandelnden Teiges weiter begünstigt.

In einer bevorzugten Ausgestaltung ist der sich in Strömungsrichtung kontinuierlich erweiternde Strömungsquerschnitt als ein sich konisch erweiternder Austrittskegel ausgebildet. Der konische Austrittskegel schließt bevorzugt unmittelbar an die zentrale Durchtrittsöffnung, mit ihrem bevorzugt gleichbleibenden Strömungsquerschnitt an und erstreckt sich bis zum Austritt bzw. der Austrittsöffnung an der Düse.

Vorzugsweise weist der Austrittskegel der Düse einen Kegelwinkel im Bereich von etwa 115° bis 135° auf. Vorzugsweise wird der Teig im Austrittskegel nach Passieren der zentralen Durchtrittsöffnung schneller entspannt im Vergleich zum Eintrittsbereich mit dem geringeren Kegelwinkel am Eintrittskegel. In einer bevorzugten Ausführungsform der Erfindung hat der Austritt bzw. die Austrittsöffnung der Düse im Vergleich zum Eintritt bzw. Eintrittsöffnung an der Düse einen verringerten Querschnitt. In einer Ausführungsform der Erfindung weist der Behandlungsraum im Übergang vom Austritt auf dem sich nachfolgenden Abschnitt im Behandlungsraum eine sprunghafte Querschnittserweiterung auf. Zudem ist gemäß einer bevorzugten Ausgestaltung das Winkelmaß des Kegelwinkels am Austrittskegel stets größer als das Winkelmaß des Kegelwinkels am Eintrittskegel der erfindungsgemäßen Düse.

Eine bevorzugte Weiterbildung der erfindungsgemäßen Vorrichtung sieht vor, dass sich stromabwärts von dem Teig-Strukturierungsabschnitt ein im Wesentlichen zylindrischer Raum anschließt, welcher vorzugsweise zum Portionieren des Teiges ausgebildet ist. In dem sich an die Düse anschließenden Abschnitt des Behandlungsraums wird der strukturierte/restrukturierte Teig portioniert. Bevorzugt wird der Teig in gleichgroße Portionen unterteilt bzw. in mehrere gleichgroße Massenströme unterteilt. Mit der erfindungsgemäßen Teig-Behandlungseinheit ist es möglich, eine Restrukturierung des Teiges vorzunehmen, die in der vorliegend beschriebenen Ausführungsform vorzugsweise unmittelbar vor einer Portionierung des Teiges durchgeführt werden.

Vorzugsweise stehen die Länge des Behandlungsraumes und die Länge der Düse in einem Verhältnis von etwa 4:1. Das angegebene Verhältnis ist bevorzugt ein Mindestmaß, weshalb die Länge des sich an den Teig-Strukturierungsabschnitt anschließenden Abschnitts des Behandlungsraumes auch größer sein kann. Damit ist eine bevorzugt gleichmäßige Portionierung des Teiges bewirkt. Bevorzugt weist der sich stromabwärts der Düse vorgesehene Raum einen im Wesentlichen kreisrunden Querschnitt auf, der über seine gesamte Länge einen gleichbleibenden Querschnitt hat. Damit ist ein besonders schonendes Fördern des bereits strukturierten/restrukturierten Teiges bis zum Teig-Auslass an der Teig-Behandlungseinheit erzielt.

Eine bevorzugte Weiterbildung der Erfindung sieht vor, dass in dem Behandlungsraum stromabwärts der Düse zusätzlich mindestens eine Schikane für den in Richtung des Teig-Auslasses geförderten Teig angeordnet ist, welche vorzugsweise wiederum unmittelbar eine Querschnittserweiterung nachgeschaltet ist. Insbesondere eine chaotische Struktur im Teig, welche während des Fördervorganges durch die Förder- und/oder Portioniereinrichtung in den Teig eingebracht wird, wird wieder aufgelöst. Durch das zumindest zeit- oder abschnittsweise Entspannen eines zu behandelnden Teiges im Behandlungsraum erfolgt eine weiterführende Form einer Restrukturierung und/oder Repolymerisierung der Teigstruktur. Vorzugsweise kann mit Hilfe der Schikane die gleichmäßige Porenstruktur innerhalb des Lebensmittels weiter verbessert werden. Bei Teigen ist dadurch eine bevorzugt regelmäßige Gashaltung innerhalb des Teiges bewirkt, wodurch letztendlich eine gesteigerte Produktqualität erzielt wird.

Gemäß einer Weiterbildung sind die eine oder mehreren Schikanen so ausgebildet und angeordnet, dass die Relaxationsstrecke mindestens einen Streckenabschnitt mit einem variierenden Strömungsquerschnitt und/oder einer sich ändernden Förderrichtung für den Teig aufweist. Mittels der mindestens einen im Behandlungsraum der Teig-Behandlungseinheit vorgesehenen Schikane erfolgt nach der Düse bevorzugt eine weitere Aufarbeitung bzw. Nachbehandlung des Lebensmittels ohne Einsatz bewegbarer Bearbeitungsmittel. Bevorzugt wird zumindest zeit- oder abschnittsweise ein Entspannen des zu behandelnden Teiges im Behandlungsraum vorgenommen. Dadurch wird der zu behandelnde Teig vorzugsweise weiter restrukturiert und/oder repolymerisiert. Eine partiell beeinflusste Teigstruktur kann somit entsprechend weiter aufgearbeitet werden, sodass die Klebernetzwirkung innerhalb der Glutenstruktur eines Teiges verbessert wird.

Gemäß einer bevorzugten Ausgestaltung ist die Düse einstückig mit wenigstens einem Teil des Gehäuses der Behandlungseinheit ausgebildet. Die Düse ist demnach ein fester Bestandteil der gesamten Teig-Behandlungseinheit, sodass im Falle eines fälligen Wechsels der Düse, aufgrund eines Produktwechsels an der Verarbeitungsvorrichtung, ggf. die gesamte Behandlungseinheit ausgetauscht werden muss. Bevorzugt ist dieser Ausgestaltung die gesamte Teig-Behandlungseinheit an die Eigenschaften der mittels einer Verarbeitungsvorrichtung zu verarbeitenden Teigmasse angepasst. Bevorzugt ist die Düse aufgrund der einstückigen Ausgestaltung mit zumindest einem Teil des Gehäuses der erfindungsgemäßen Teig-Behandlungseinheit demnach integraler Bestandteil derselbigen.

In einer alternativen Ausgestaltung ist der Teig-Strukturierungsabschnitt mit seiner Düse als separates Bauteil ausgebildet und in einem Abschnitt des Behandlungsraumes der erfindungsgemäßen Teig-Behandlungseinheit austauschbar aufgenommen. Die Ausgestaltung des Teig-Strukturierungsabschnitts oder bevorzugt der Düse als separat austauschbares Bauteil ermöglicht eine vereinfachte und vor allem individuelle Anpassung der erfindungsgemäßen Teig-Behandlungseinheit an etwaige sich ändernde Eigenschaften eines zu verarbeitenden Teiges nach einem möglichen Produktwechsel. Durch die separate Ausgestaltung der Düse zur Behandlungseinheit kann im Bedarfsfall nur die Düse ausgetauscht werden, ohne dass die gesamte Behandlungseinheit zu wechseln wäre. Vorzugsweise weist eine an einer Behandlungseinheit auswechselbare Düse mit der Behandlungseinheit zusammenwirkende Arretierelemente auf, die während der Teig-Verarbeitung, insbesondere beim Hindurchpressen des Teiges durch die Düse, ein ungewolltes Verschieben der Düse innerhalb des Behandlungsraumes der Behandlungseinheit behindern.

In einer bevorzugten Ausgestaltung weist die Düse als Material Kunststoff oder Metall auf oder ist aus Kunststoff, Metall oder einer Kombination aus beiden Werkstoffen ausgebildet. Vorliegend werden Werkstoffe verwendet, die die notwendigen Anforderungen bei der Verarbeitung von Lebensmitteln, insbesondere dem vorliegend zu bearbeitenden Teigmassen erfüllen.

Die erfindungsgemäße Vorrichtung umfasst somit eine erfindungsgemäße Teigbehandlungseinheit, die stromabwärts der Füllmaschine, also in Förderrichtung hinter der Füllmaschine angeordnet ist. Damit ist auf vorteilhafte Weise erreicht, dass der zuvor geschädigte Teig, hervorgerufen durch das Fördern und das damit verbundene Umwälzen des Teiges, so strukturiert/restrukturiert wird, dass innerhalb des Teiges, nach Durchlaufen der Behandlungseinheit die inneren Spannungen in der Glutenstruktur kompensiert werden. Dabei wird der Teig einer kontrollierten Stressbeanspruchung unterzogen. D.h. der Teig wird gezielt aufbereitet bzw. beansprucht. Statt einer schonenden Aufbereitung des Teiges erfolgt eine Strukturierung bzw. Restrukturierung der Teigstruktur, bei der strukturbildende Proteine dünne großflächige Glutenfilme bilden und sich große Oberflächenspannungen im Material aufbauen können. Derartig restrukturierte Teige weisen im Vergleich zu herkömmlich bearbeitenden Teigen eine größere Anzahl von feinen Mikroporen auf, innerhalb denen Gärgase stärker gehalten werden können. Damit ist im Ergebnis ein aus einem solch erfindungsgemäß restrukturierten Teig hergestelltes Gebäck feinporiger, wattiger und voluminöser. Zudem ist mittels der strukturell vereinfachten, erfindungsgemäßen Teig-Behandlungseinheit eine Leistungssteigerung bei der Verarbeitung der Teige bis auf das Doppelte der sonst üblichen Verarbeitungsmengen an Teig möglich.

Gemäß einer bevorzugten Ausgestaltung der erfindungsgemäßen Vorrichtung weist diese ferner einen Teig-Zugabeöffnung, eine Teig-Ausgabeöffnung und eine sich zwischen der Zugabeöffnung und der Ausgabeöffnung erstreckende, gegenüber der Umgebung im Wesentlichen geschlossene Verarbeitungsstrecke auf. Der Teig wird über die Zugabeöffnung in die Vorrichtung eingeführt, wobei in der Regel die Zugabeöffnung als Fülltrichter ausgebildet ist. In den Fülltrichter wird eine vorbestimmte Menge an zu verarbeitenden Teig eingegeben. Vom Fülltrichter aus wird dann der Teig mittels einer Förderpumpe der Füllmaschine entlang der geschlossenen Verarbeitungsstrecke gefördert. Mit Durchlaufen der bevorzugt geschlossenen Verarbeitungsstrecke tritt der durch das Fördern geschädigte Teig nach Durchlaufen der Förderpumpe in die Behandlungseinrichtung ein. Innerhalb der Behandlungseinrichtung wird der Teig dann restrukturiert und erhält die für die weitere Verarbeitung gewünschten Eigenschaften. Das Vorsehen einer geschlossenen Verarbeitungsstrecke bewirkt, dass der zu verarbeitende Teig keinen äußeren Einflüssen ausgesetzt ist oder ggf. verunreinigt werden könnte, wodurch die Teigqualität nachteilig beeinflusst werden könnte.

Erfindungsgemäß ist zudem an der Vorrichtung eine Portioniervorrichtung zum Unterteilen des die Verarbeitungsstrecke passierende Teiges in einzelne Portionen oder in mehrere gleichgroße Massenströme vorgesehen, wobei die Teig-Behandlungseinheit vorzugsweise unmittelbar hinter der Portioniervorrichtung angeordnet ist. Mit der erfindungsgemäßen Teig-Behandlungseinheit ist es möglich, den Teig unmittelbar nachdem dieser portioniert wurde, zu restrukturieren. Damit erhält der zu verarbeitende Teig die gewünschte Eigenschaft zu einem Zeitpunkt des Verarbeitungsprozesses, in dem nachträglich Schäden an der Glutenstruktur des weiter zu verarbeitenden Teiges so gering wie möglich gehalten werden. Dadurch hat der Teig nach dem Ausgeben aus der Teig-Ausgabeöffnung bevorzugt die gewünschten rheologischen Eigenschaften, ohne das eine weitere aufwändige Nachbearbeitung durch etwaige zusätzlich durchzuführende weitere Bearbeitungsschritte, wie beispielsweise ein Rund- oder Langwirken, notwendig wird.

Bevorzugt zeichnet sich die erfindungsgemäße Vorrichtung durch mindestens eine Zugabestelle in der Verarbeitungsstrecke für in den zu behandelnden Teig einzugebende Zusätze auf. Die Zugabestelle kann bevorzugt vor, oder nach der Teig-Behandlungseinrichtung angeordnet sein. Mithilfe der Zugabestelle, welche zumindest eine Zugabeöffnung aufweist, können feste oder flüssige Zusätze in die Verarbeitungsstrecke eingegeben werden, die das Strukturieren/Restrukturieren des zu behandelnden Teiges unterstützen. In einer Ausführungsform der Erfindung können auch mehrere Zugabestellen entlang der Verarbeitungsstrecke angeordnet sein.

Gemäß einer bevorzugten Weiterbildung der erfindungsgemäßen Verarbeitungsvorrichtung umfasst die Portioniervorrichtung eine Trenneinrichtung zum Unterteilen des Lebensmittels in Einzelportionen, wobei die Trenneinrichtung vorzugsweise mindestens ein bewegbares Trennmesser aufweist. Bevorzugt ist die Trenneinrichtung der Teig-Ausgabeöffnung zugeordnet. Insbesondere nach dem Strukturieren/Restrukturieren des Teiges wird bevorzugt mit dem Austreten des restrukturierten Teiges aus der Teig-Ausgabeöffnung dieser in einzelne Portionen unterteilt. Das Unterteilen erfolgt unter Verwendung eines oder mehrerer bewegbarer, insbesondere eines rotierbarer Trennmessers. Jedes bewegbare Trennmesser wird bevorzugt kontinuierlich bewegt und passiert die Teig-Ausgabeöffnung in vorgegebenen Zeitabständen. Mit dem Passieren der Teig-Ausgabeöffnung wird der entlang der Verarbeitungsstrecke kontinuierlich oder taktweise geförderte Teig in Portionen gewünschter Größe oder Masse unterteilt.

In einer möglichen Ausführung der vorliegenden Erfindung ist die Förderpumpe als Schneckenpumpe, als Doppelspindelpumpe, als Zahnradpumpe oder Flügelzellenpumpe zum Fördern und/oder Portionen des Lebensmittels ausgebildet. Mittels der Förderpumpe wird innerhalb der Verarbeitungsstrecke bevorzugt ein optimaler Füllgrad erreicht. Das Fördern des Teiges mittels der Förderpumpe erfolgt bevorzugt kontinuierlich, chargen- oder taktweise mit einem im Wesentlichen kontinuierlichen Massenstrom.

Die Erfindung betrifft gemäß einem weiteren Aspekt ein Verfahren zum Verarbeiten von Teig, umfassend die Schritte: Einbringen eines Teiges in eine Teig-Zugabeöffnung einer im Wesentlichen geschlossenen Verarbeitungsstrecke, Fördern des Teiges in der Verarbeitungsstrecke mittels einer Füllmaschine in Richtung einer Teig-Ausgabeöffnung. Das Verfahren löst ebenfalls die bei der erfindungsgemäßen Teig-Behandlungseinheit zugrunde gelegte Aufgabe, indem der Teig eine Behandlungseinheit durchläuft, welche in Förderrichtung des Teiges hinter der Füllmaschine angeordnet ist, Behandeln des Teiges in der Behandlungseinheit mittels Hindurchleiten des Teiges durch einen Teig-Strukturierungsabschnitt mit einer den Strömungsquerschnitt verringernden Düse zum Strukturieren/Restrukturieren des Teiges, anschließendes Erweitern des Strömungsquerschnitts beim Hindurchleiten durch die Düse, und Portionieren des Teiges vor dem Behandeln des Teiges mittels einer Portioniervorrichtung. Mit dem erfindungsgemäßen Verfahren wird der Ansatz verfolgt, statt einer im Stand der Technik üblichen schonenden Teigaufarbeitung nunmehr eine mechanische Beanspruchung des Teiges vorzunehmen, die eine Restrukturierung der Glutenstruktur innerhalb des Teiges bewirkt. Damit werden Spannungen im Inneren der Glutenstruktur kompensiert und es kommt zur Ausbildung dünner, großflächiger Glutenfilme, die eine wesentlich höhere Oberflächenspannung haben. Dadurch verbessert sich der Anteil von feinen Poren innerhalb des Teiges, wodurch die Gashaltung verbessert ist. Aus Teigmassen, die mittels eines solch erfindungsgemäßen Verfahrens verarbeitet werden, lassen sich Gebäcke herstellen, die feinporiger, wattiger und voluminöser sind als Gebäcke, die mit herkömmlichen Teig-Verarbeitungsverfahren hergestellt werden. Entscheidend ist vorliegend, dass mittels der Düse eine mechanische Beanspruchung des Teiges bei der Nachbehandlung erfolgt, ohne dabei die Schergrenze der Glutenstruktur innerhalb des Teiges zu erreichen.

Gemäß einer Weiterbildung umfasst das Verfahren den nachfolgend aufgeführten Schritt: Behandeln des Teiges durch gezieltes mechanisches Beanspruchen des Teiges in mehrere Richtungen,. Beim Behandeln des Teiges wird bevorzugt der Teig statt in nur einer Richtung, wie es beispielsweise bei bekannten Knetverfahren der Fall ist, gleichzeitig in mehrere Richtungen also dreidimensional mechanisch beansprucht. Vorzugsweise ist eine mechanische Beanspruchung im richtigen Verhältnis zu den Grundeigenschaften des zu verarbeitenden Teiges entscheidend. Daher kann es notwendig sein, dass die mechanische Behandlung in Abhängigkeit von dem zu verarbeitenden Teigen angepasst wird. Insbesondere kann in Abhängigkeit von den zu verarbeitenden Teigen, insbesondere im Zusammenhang mit einem vorzunehmenden Produktwechsel der Austausch der Düse innerhalb der Verarbeitungsstrecke notwendig sein. Bevorzugt wird mit einem Wechsel der Düse in der Verarbeitungsstrecke das Verhältnis der Querschnittsänderung im Behandlungsraum angepasst. Im Falle einer Querschnittsverringerung steigt der Druck vor der Düse, der auf den zu behandelnden Teig wirkt. Nach Durchtritt durch eine zentrale Durchtrittsöffnung wird der Strömungsquerschnitt wieder erweitert, wodurch sich der Teig in einem Abschnitt der Düse wieder entspannen kann. Bevorzugt wird der Teig entlang eines Abschnitts der Düse kontinuierlich komprimiert und durchläuft einen Abschnitt der Düse innerhalb dem dieser wieder kontinuierlich entspannt.

Mit zunehmender Teigtemperatur erhöht sich der Vernetzungsgrad im Teig in deren Folge die Teige ihr Materialverhalten verändern. Es entsteht ein ausgeprägtes viskoelastisches Verhalten. Solche Teige reagieren auf richtungsorientierte mechanische Beanspruchung empfindlich. Der Grund ist, dass das Glutennetz im Teig nur einen begrenzten Spannungsaufbau in einer Richtung verträgt und dann reißt. Gebäcke aus diesen Teigen sind grobporig und haben ein kleines Volumen. Durch einen mehrfachen Richtungswechsel der mechanischen Belastung auf das Glutennetz des Teiges werden die inneren Spannungen in der Glutenstruktur kompensiert und es kommt zur Ausbildung dünner, großflächiger Glutenfilme, die sich durch eine wesentlich höhere Oberflächenspannung auszeichnen. Die Gebäcke aus diesen Teigen haben eine feine Porung und ein großes Volumen.

Bei diesen Verfahren wird der Teig mittels einer Pumpe o ä. durch eine Behandlungskammer gefördert, in der der Teig strukturiert wird. Die Querschnittsgeometrie der Kammer bestimmt die Formung des Teiges, welcher aus einen kontinuierlichen Teigstrom in Backformen oder auf Gärgutträger mittel Messerwalze portioniert wird. Bei der kontinuierlich rotierenden Messerwalze handelt es um eine Abschneidevorrichtung, die kein eigenes Kammervolumen hat. Hier wird ein kontinuierlich geförderter Teigstrom am Kammerausgang abgeschnitten. Dabei werden Schwankungen in der Teigdichte durch eine Querschnittsreduzierung im Vorfeld ausgeglichen. Die Portionierleistung kann theoretisch bis zum Erreichen der Abreißdauer gesteigert werden.

Der Vorteil des Verfahrens liegt in der Beeinflussung der Vernetzung der Proteine und im folgendem der Porenstruktur des Teiges und der Krume des Gebäckes. Das neue Verfahren zeichnet sich wie folgt aus:
Der Teig wird in einen Prozessschritt strukturiert, geformt und portioniert.

Das rheologische Teigverhalten ein und desselben Teiges ist durch Verändern der Bearbeitungseinheit (Werkzeuggeometrie und Bearbeitungsparameter) beeinflussbar. Man kann das Teigverhalten von einem plastischen Verhalten zu einen viskoelastischen oder viskosen Teigverhalten durch Einwirkung von Scherkräften verschieben. Die Porenstruktur des Teiges verändert sich nur geringfügig und führt im Gebäck zu einer quasi identischen Krumenstruktur (Schaumstruktur).

Die Vorrichtung bewirkt im Teig ein räumliches Spannungsgleichgewicht. Aus der ungeordneten Proteinstruktur im gekneteten Teig entsteht durch Be- und Entlastung der Proteinstruktur im Teig eine geordnete Proteinfilm- und Netzstruktur, hervorgerufen durch biochemische Redox- Reaktionen. Ist das Spannungsgleichgewicht räumlich ausgeglichen, entstehen stabile, großflächige Proteinfilme, die miteinander stärker vernetzen. Die Folge ist, die Oberflächenspannung des Proteinnetzes im Teig nimmt zu und die eingearbeitete Luft und Gärgase werden als Mikroeinschlüsse (Minigaseinschlüsse) stabil gehalten. Im Ergebnis entsteht durch Backen eine feinporige Gebäckkrume.

Das Erzeugen einer stabilen räumlichen Struktur wird maschinentechnisch durch die Kombination von Werkzeugen und Maschinenparametern (Schwingungsfrequenz, Querschnittsveränderung, Drehzahl, Einbauten (Schikanen, statische Mischer o.ä.)) und Länge der Behandlungseinheit bestimmt. Die Geometrie der Werkzeuge und die Länge der Behandlungseinheit und das Verhältnis zueinander bestimmen das Verhältnis zwischen Spannung und Relaxation im Teig.

Der Teig wird durch den Querschnitt der Behandlungskammer zu einen (endlosen)kontinuierlichen Teigstrom geformt und durch eine Abteilvorrichtung getrennt. Die Teigstücke werden direkt in Backformen/Gärkörbe portioniert.

Ferner betrifft die Erfindung in einem weiteren Aspekt ebenfalls die Verwendung einer Düse in einer Teig-Behandlungseinheit.

Die Verwendung löst die eingangs bezeichnete Aufgabe, in dem eine Düse in einer Behandlungseinheit nach einer der vorstehend beschriebenen bevorzugten Ausführungsformen zum Strukturieren/Restrukturieren des Teiges eingesetzt wird.

Die zur erfindungsgemäßen Teig-Behandlungseinheit beschriebenen, bevorzugten Ausführungsformen bzw. Weiterbildungen sind zugleich auch bevorzugte Ausführungsformen der erfindungsgemäßen Verarbeitungsvorrichtung, des erfindungsgemäßen Verfahrens sowie der Verwendung einer Düse in einer erfindungsgemäßen Teig-Behandlungseinheit. Zur Vermeidung von Wiederholungen wird auf die obigen Ausführungen verwiesen.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine perspektivische Ansicht einer Vorrichtung zum Verarbeiten von Teig mit einer erfindungsgemäßen Behandlungseinrichtung;
- Fig. 2:: eine Teilansicht der erfindungsgemäßen Verarbeitungsvorrichtung nach Fig. 1 m Schnitt;
- Fig. 3:: eine Ansicht der Behandlungseinrichtung nach Fig. 2 im Schnitt;
- Fig. 4:: eine Ansicht einer weiteren Ausführungsform einer Teig-Behandlungseinheit;
- Fig. 5:: eine perspektivische Ansicht einer weiteren Ausführungsform einer erfindungsgemäßen Vorrichtung zum Verarbeiten von Teig;
- Fig. 6:: eine Teilansicht der Verarbeitungsvorrichtung nach Fig. 5 im Schnitt;
- Fig. 7:: eine Ansicht einer Portioniervorrichtung mit einer erfindungsgemäßen Teig-Behandlungseinheit in einer Draufsicht im Schnitt, und
- Fig. 8:: eine Ansicht der Portioniervorrichtung mit der darin angeordneten Teig-Behandlungseinheit nach Fig. 5 im Längsschnitt.

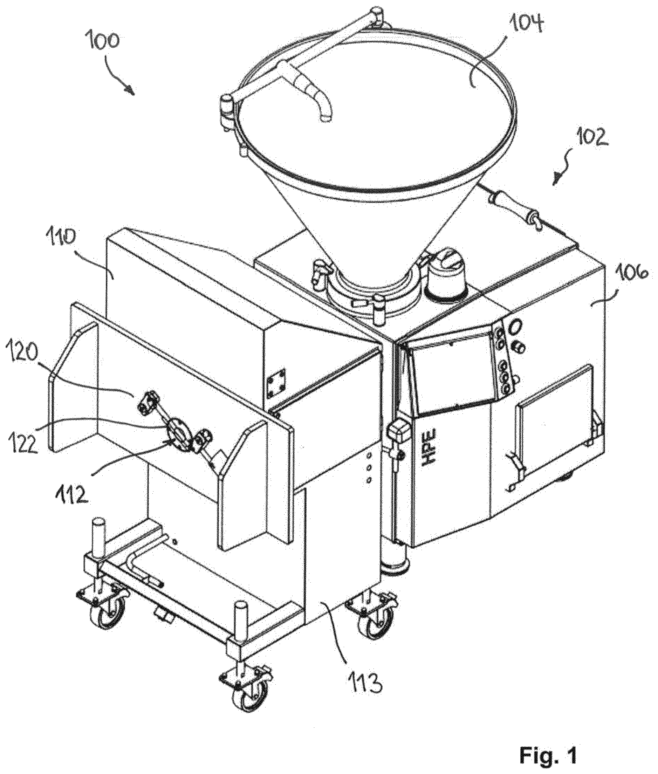

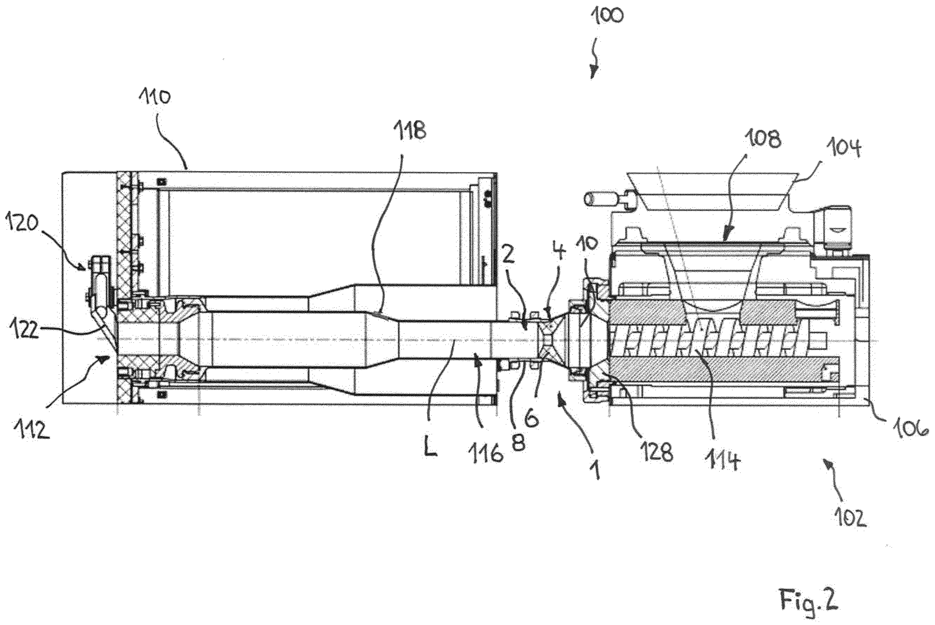

Fig. 1 zeigt eine Vorrichtung 100 zum Verarbeiten von Teig. Die Vorrichtung 100 umfasst eine Füllmaschine 102, die einen Fülltrichter 104 zum Aufnehmen von Teig aufweist, der an einem Gehäuse 106 der Füllmaschine 102 angeordnet ist. Der Fülltrichter 104 bildet dabei eine Teig-Zugabeöffnung 108 für den mittels der Vorrichtung 100 zu verarbeitenden Teig aus. Die Füllmaschine 102 weist ferner eine Förderpumpe 114 (Fig. 2), einen Auslass zum Abgeben des Teiges, eine Steuerung und weitere bekannte Komponenten auf. Mit der Füllmaschine 102 ist eine Portioniervorrichtung 110 gekoppelt, derart, dass Teig der Portioniervorrichtung 110 in Förderrichtung zugeführt werden kann.

Die Portioniervorrichtung 110 ist in der vorliegenden Ausführungsform dazu eingerichtet, den in der Vorrichtung 100 zu verarbeitenden Teig in einzelne Portionen zu unterteilen. Die Portioniervorrichtung 110 weist eine Teig-Ausgabeöffnung 112 zum Ausgeben des Teiges aus der Vorrichtung 100 auf. Die Portioniervorrichtung 110 ist in der vorliegenden Ausgestaltung als Vorsatzgerät für die Füllmaschine 102 ausgebildet. Im Bedarfsfall kann die Portioniervorrichtung 110 mittels ihres fahrbaren Rahmengestells 113 ausgetauscht werden. Unter einem Vorsatzgerät für die Füllmaschine 102 ist vorliegend eine Komponente zu verstehen, die der Füllmaschine 102 nachgeschaltet ist, also in Förderrichtung des zu verarbeitenden Teiges hinter der Füllmaschine oder stromabwärts angeordnet wird.

Fig. 2 zeigt eine Teilansicht der Füllmaschine 102 und der Portioniervorrichtung 110 im Schnitt. Wie aus Fig. 2 ersichtlich, weist die Füllmaschine 102 eine Förderpumpe 114 auf.

Mittels der Förderpumpe 114 wird der über dem Fülltrichter 104 in die Füllmaschine eingegebene Teig in Richtung der Ausgabeöffnung 112 der Portioniervorrichtung 110 gefördert. Zwischen der Zugabeöffnung 108 und der Ausgabeöffnung 112 ist eine im Wesentlichen geschlossene Verarbeitungsstrecke 116 für den darin zu verarbeitenden Teig ausgebildet.

Eine Teig-Behandlungseinheit 1 ist stromabwärts von der Füllmaschine 102 angeordnet, vorzugsweise in einem Abschnitt der Förderstrecke 116. Im Ausführungsbeispiel bildet bevorzugt die Teig-Behandlungseinheit 1 einen Verbindungsbereich zwischen der Füllmaschine 102 und der Portioniervorrichtung 110. Die Teig-Behandlungseinheit 1 ist in der gezeigten Ausführung mit einem Füllmaschinenanschluss 128 fluidleitend verbunden. Die Teig-Behandlungseinheit 1 umfasst einen durch Wandungen begrenzten Behandlungsraum 2 mit einem Teig-Strukturierungsabschnitt 4 für einen die Behandlungseinheit 2 passierenden, durchströmenden Teig. Der Teig-Strukturierungsabschnitt 4 weist eine den Strömungsquerschnitt im Behandlungsraum 2 verringernde Düse 6 auf, die dazu eingerichtet ist, den Teig zu strukturieren/restrukturieren. Stromabwärts der Düse 6 ist der Strömungsquerschnitt des Teig-Strukturierungsabschnitts 4 im Behandlungsraum 2 gegenüber dem verringerten Strömungsquerschnitt im Bereich der Düse 6 wieder erweitert. Mit der vorliegenden Ausgestaltung des Teig-Strukturierungsabschnitts 4 erfolgt insbesondere nach einer mittels der Förderpumpe 114 vorgenommenen negativen Beeinflussung oder Schädigung in der Teig-Struktur eine (Re-) Strukturierung des Teiges zur Verbesserung seiner rheologischen Eigenschaften.

Im Betrieb wird der Teig nach dem Passieren der Teig-Behandlungseinheit 1 in Richtung der Portioniervorrichtung 110 gefördert. Dabei passiert der Teig einen Abschnitt 118 im innerhalb der Verarbeitungsstrecke 116, der einen im Vergleich zum Behandlungsraum 2 sich nochmalig erweiternden Strömungsquerschnitt hat. In dem Abschnitt verlangsamt sich demnach noch einmal die Geschwindigkeit des geförderten Teiges.

Am Auslass der Portioniervorrichtung 110 ist eine Trenneinrichtung 120 zum Unterteilen des Lebensmittels in einzelne Portionen vorgesehen. Die Trenneinrichtung 120 weist mindestens zwei bewegbare Trennmesser 122 auf. Die Trennmesser 122 sind in der gezeigten Ausführungsform drehbar gelagert. Jedes Trennmesser 122 rotiert mit einer einstellbaren Geschwindigkeit und passiert die Ausgabeöffnung 112 in gleichmäßigen Zeitabständen, sodass von einem insbesondere kontinuierlich geförderten Teigstrang fortwährend entsprechende Einzelportionen abgetrennt werden.

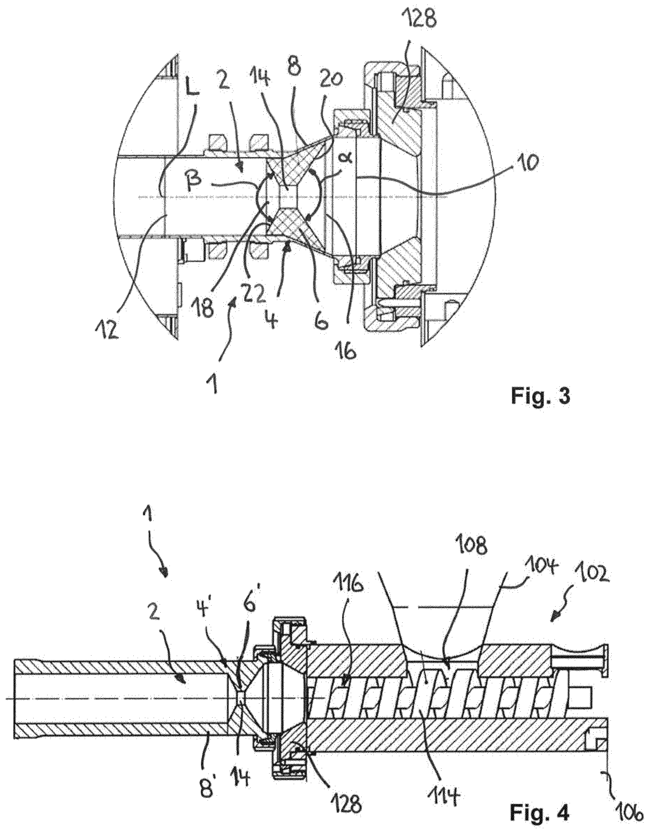

Fig. 3 zeigt eine vergrößerte Darstellung einer ersten Ausführungsform der Teig-Behandlungseinheit 1, die ein Gehäuse 8 aufweist, das den Behandlungsraum 2 zum Behandeln des Teiges definiert. Ferner weist die Behandlungseinheit 1 einen Teig-Einlass 10 zum Einleiten von Teig in das Gehäuse 8 und einen Teig-Auslass 12 zum Ausgeben des Teiges aus dem Gehäuse 8 auf. Innerhalb des Gehäuses 8 und damit im Behandlungsraum 2 ist der Teig-Strukturierungsabschnitt 4 angeordnet, der aus einer Düse 6 ausgebildet ist.

Wie Fig. 3 ferner verdeutlicht, weist die Düse 6 eine zentrale Durchtrittsöffnung 14 auf, die in der gezeigten Ausführungsform einen gleichbleibenden Strömungsquerschnitt hat, aber auch in Förderrichtung des Teiges oder entlang der Längsachse L variierende Strömungsquerschnitte aufweisen kann. Vorliegend weist die zentrale Durchtrittsöffnung 14 einen kreisförmigen Querschnitt auf, wobei die Mittelachse der Durchtrittsöffnung 14 koaxial zur Längsachse L des Gehäuses 8 angeordnet ist. Das Gehäuse 8 ist vorliegend im Wesentlichen rotationssymmetrisch und bildet eine Art Verbindungsrohr zwischen der Füllmaschine 102 und der Portioniervorrichtung 110 aus.

In der in Fig. 3 gezeigten Ausführungsform weist die Düse einen Eintritt 16 und einen Austritt 18 auf. Der Austritt 18 weist im Vergleich zum Eintritt 16 an der Düse einen verringerten Querschnitt auf. Die zentrale Durchtrittsöffnung 14 hat einen Durchmesser, der im Vergleich zum Durchmesser des Gehäuses 8 vor und nach dem Teig-Strukturierungsabschnitt 4 ein Verhältnis hat, das im Bereich von ungefähr 1:3 bis etwa 1:12 liegt.

In der vorliegenden Ausführungsform hat die Düse 6 einen sich vom Eintritt 16 in Richtung der zentralen Durchtrittsöffnung 14 verjüngenden Abschnitt, vorzugsweise konisch verjüngenden Eintrittskegel 20. Der Eintrittskegel 20 weist einen Kegelwinkel α im Bereich von etwa 100° bis 120° auf. Die Düse 6 hat bevorzugt einen sich von der zentralen Durchtrittsöffnung 14 zum Austritt 18 erweiternden Abschnitt, vorzugsweise konisch erweiternden Austrittskegel 22. Der Austrittkegel 22 hat einen Kegelwinkel β im Bereich von etwa 115° bis 135°.

Wie Fig. 3 verdeutlicht, ist die Düse 6 bevorzugt als separates Bauteil ausgebildet und in einem Abschnitt im Behandlungsraum 2 des Gehäuses 8 angeordnet. Vorliegend ist die Düse 6 austauschbar ausgebildet. Im Bedarfsfall bzw. in Abhängigkeit von den mittels der Verarbeitungsvorrichtung 100 zu verarbeitenden Teigmassen kann die Düse 6 durch eine entsprechend andere geeignete Düse mit abweichenden Abmaßen ausgetauscht werden. Sie könnte alternativ auch integral an dem Gehäuse 8 ausgebildet sein, wie nachfolgend beschrieben.

Fig. 4 zeigt eine alternative Ausgestaltung einerTeig-Behandlungseinheit 1, die einen Teig-Strukturierungsabschnitt 4' aufweist, der eine Düse 6` hat, die einstückig mit zumindest einem Teil des Gehäuses 8` der Behandlungseinheit 1 ausgebildet ist. Im Falle eines Produktwechsels ist dann anstelle nur der in Fig. 3 gezeigten Düse 6 das komplette Gehäuse 8` der Behandlungseinheit 1 auszutauschen. Der in Fig. 4 gezeigte Teig-Strukturierungsabschnitt 4' weist sonst sämtliche zu den in Fig. 3 gezeigten Ausführungsbeispiel beschriebene Merkmale auf. Die identischen Merkmale sind mit denselben Bezugszahlen bezeichnet. Das Gehäuse 8' weist im Gegensatz zu dem Gehäuse 8 in Fig. 3 eine größere Materialstärke auf. Die in den Fig. 1 bis 4 gezeigte Teig-Behandlungseinheit 1 ist in Förderrichtung des Teiges vor einer Portioniervorrichtung 110 angeordnet.

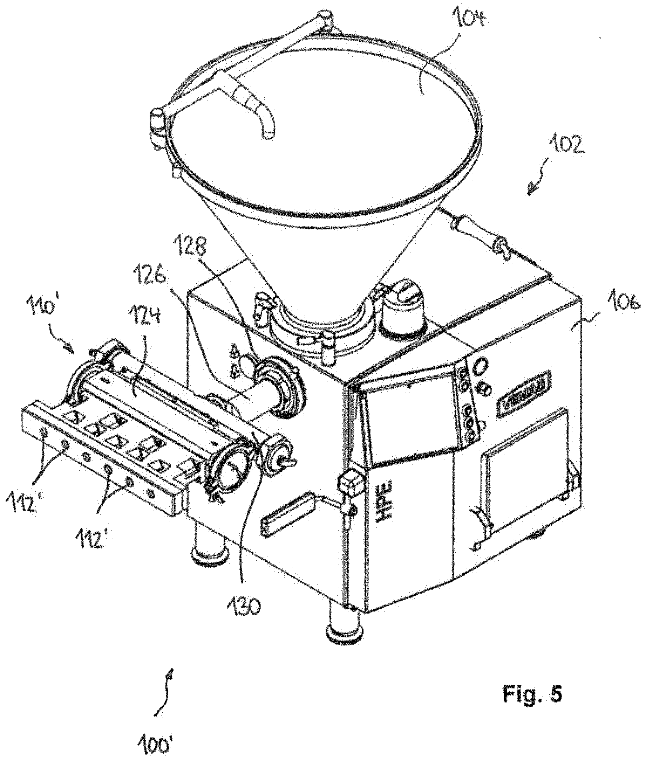

Fig. 5 zeigt eine alternative Ausgestaltung einer Vorrichtung 100' zum Verarbeiten von Teig. Die Vorrichtung 100' umfasst, wie die vorherige Ausgestaltung, eine Füllmaschine 102, die einen Fülltrichter 104 zum Aufnehmen von Teig aufweist. Der Fülltrichter 104 ist am Gehäuse 106 der Füllmaschine angeordnet. Vorliegend definiert auch hier der Fülltrichter 102 die Teig-Zugabeöffnung 108 für den mittels der Vorrichtung 100' zu verarbeitenden Teig. Mit der Füllmaschine 102 ist eine Portioniervorrichtung 110' gekoppelt.

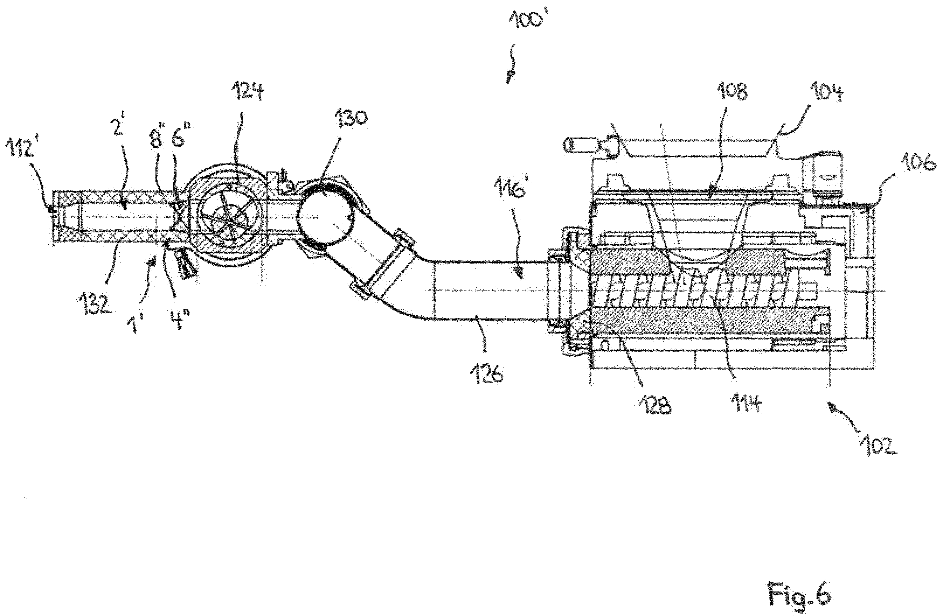

Die Portioniervorrichtung 110' ist in dieser Ausgestaltung dazu eingerichtet, den in der Vorrichtung 100' zu verarbeitenden Teig in mehrere gleichgroße Massenströme zu unterteilen. Die Portioniervorrichtung 110 umfasst einen Füllstromteiler 124, der über eine Verbindungsleitung 126 mit dem Füllmaschinenanschluss 128 gekoppelt ist. Der Füllstromteiler 124 weist einen quer zur Förderrichtung der Teigmasse verlaufendes Verteilerrohr 130 auf, von dem aus die Teigmasse mittels des Füllstromteilers auf mehrere Ausgabeleitungen 132 (Fig. 6) verteilt wird. Die Portioniervorrichtung 110 weist in Abhängigkeit der Anzahl der an dem Füllstromteiler 124 vorgesehenen Ausgabeleitungen 132 eine korrespondierende Anzahl von Ausgabeöffnungen 112' auf. Die Portioniervorrichtung 110' ist ebenfalls als Vorsatzgerät für die Füllmaschine 102 ausgebildet, die an dem Füllmaschinenanschluss 128 wieder demontiert werden kann.

In Fig. 6 sind die Füllmaschine 102 und die Portioniervorrichtung 110' als Teilansicht im Schnitt abgebildet. Die Füllmaschine 102 weist eine Förderpumpe 114 für die von dem Fülltrichter 104 in Richtung des Füllmaschinenanschlusses 128 zu fördernden Teig auf. Die Förderpumpe 114 ist in der vorliegenden Ausführungsform als Schneckenpumpe ausgebildet. Durch den mittels der Förderpumpe 114 erzeugten Förderstrom wird die Teigmasse weiter über die Verbindungsleitung 126 über das Verteilerrohr 130 in den Füllstromteiler 124 geleitet. Von dem Füllstromteiler 124 wird die Teigmasse dann auf eine Vielzahl von hintereinander angeordneten Ausgabeleitungen 132 verteilt. Die gleichgroßen Massenströme werden dann über die Ausgabeöffnung 112' der Portioniervorrichtung 110' ausgegeben. Auch dieses Ausführungsbeispiel der erfindungsgemäßen Vorrichtung 100' hat eine im Wesentlichen geschlossene Verarbeitungsstrecke 116`, die von der Zugabeöffnung 108 bis zur den Ausgabeöffnungen 112` reicht.

In der Portioniervorrichtung 110' ist in Förderrichtung 133 des Teiges hinter dem Füllstromteiler 124 eine Teig-Behandlungseinheit 1' angeordnet, die einen Behandlungsraum 2' zum Behandeln des Teiges innerhalb der Ausgabeleitungen 132 hat. Der Behandlungsraum 2' und das Gehäuse 8" der Teig-Behandlungseinheit 1' wird zumindest teilweise durch die Ausgabeleitungen 132 definiert. Im Behandlungsraum 2` ist ein Teig-Strukturierungsabschnitt 4" mit einer Düse 6" angeordnet. Die Düse 6" ist dazu eingerichtet, den Teig beim Hindurchleiten durch den Strukturierungsabschnitt 4" zu strukturieren/restrukturieren. Mit der Düse 6" wird ebenfalls der Strömungsquerschnitt im Behandlungsraum 2` derart verringert, dass eine mechanische Beanspruchung der durch die Teig-Behandlungseinheit 1' geleiteten Teigmasse bewirkt ist. Hinter der Düse 6" wird der Strömungsquerschnitt in Behandlungsraum 2 dann wieder nahezu bis auf den ursprünglichen Wert vor der Düse 6" erweitert.

Mit der vorliegend gezeigten Ausgestaltung erfolgt eine Nachbehandlung der Teigmasse unmittelbar nach dem Portioniervorgang. Die entsprechenden geteilten Massenströme werden dann nach ihrer Nachbehandlung direkt in Richtung der Ausgabeöffnungen 112' der Portioniervorrichtung 110' abgeführt.

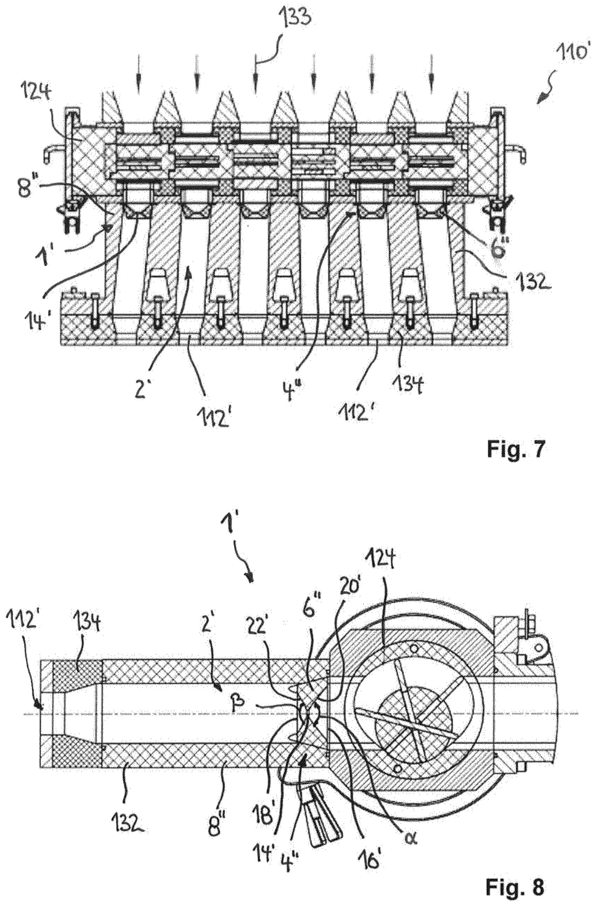

Die Figuren 7 und 8 zeigen eine vergrößerte Darstellung einer Ausführungsform der Teig-Behandlungseinheit 1'. Die Teig-Behandlungseinheit 1' ist mit ihrem Teig-Einlass 10` am Gehäuse 8" direkt mit dem Füllstromteiler 124 gekoppelt. Der Teig-Auslass 12` am Gehäuse 8" ist mit einem sich verjüngenden Auslassbereich 134 der Portioniervorrichtung 110' verbunden. Die Düse 6" ist am Anfang des Teig-Behandlungsraumes 2` angeordnet, wobei der Eintritt 16` der Düse 6" mit dem Einlass 10` am Gehäuse 8"zusammenfällt. Wie in der vorherigen Ausführungsform weist die Düse 6" eine zentrale Durchtrittsöffnung 14` mit einem gleichbleibenden Strömungsquerschnitt auf. Vorliegend weist die zentrale Durchtrittsöffnung 14` einen kreisförmigen Querschnitt auf. Bezogen auf ihren Umfang ist die Durchtrittsöffnung 14`gleichmäßig beabstandet zur Wandung des Behandlungsraumes 2`. Das Gehäuse 8" ist vorliegend im Wesentlichen rotationssymmetrisch.

Der Austritt 18` an der Düse 6` ist im Vergleich zum Strömungsquerschnitt des nachgeschalteten Behandlungsraumes 2` kleiner ausgebildet. Vom Austritt 18` an der Düse 6" zum nachgeschalteten Behandlungsraum 2` erweitert sich der Strömungsquerschnitt in der vorliegenden Ausführungsform sprungartig. Auch in dieser Ausgestaltung weist die zentrale Durchtrittsöffnung 14' einen Durchmesser auf, der im Vergleich zum Durchmesser des Gehäuses 8` vor und nach dem Teig-Strukturierungsabschnitt 4' ein Verhältnis hat, das im Bereich von etwa 1:3 bis etwa 1:12 liegt.

Die Düse 6" hat in der in Fig. 8 gezeigten Ausführungsform ein sich vom Eintritt 16` in Richtung der zentralen Durchtrittsöffnung 14` konisch verjüngenden Eintrittskegel 20`. Der Eintrittskegel 20` weist einen Kegelwinkel α im Bereich von etwa 100° bis 120° auf. Zudem hat die Düse 6" einen Austrittskegel 22`, der sich von der zentralen Durchtrittsöffnung 14` zum Austritt 18` ebenfalls konisch erweitert. Der Austrittskegel 22` hat einen Kegelwinkel β mit einem Winkelmaß im Bereich von etwa 115° bis 135°. Der Kegelwinkel am Austrittskegel 22` hat ein Winkelmaß, das im Vergleich zum Kegelwinkel am Eintrittskegel 20` größer ist. Ähnliche oder identische Bauteile sind mit demselben Bezugszahlen bezeichnet.

Die Erfindung wird ferner anhand nachfolgender Ausführungsbeispiele beschrieben:
Ausführungsbeispiel 1. Teig-Behandlungseinheit (1, 1') zum Behandeln von Teig mit einem Gehäuse (8, 8`, 8"),
einem Teig-Einlass (10, 10`) zum Einleiten von Teig in das Gehäuse (8, 8`, 8"),
einem Teig-Auslass (12, 12`) zum Ausgeben des Teiges aus dem Gehäuse (8, 8`, 8"), und einem Behandlungsraum zum Behandeln des Teiges, welche innerhalb des Gehäuses (8, 8`, 8") entlang eines Abschnitts zwischen dem Einlass und dem Auslass angeordnet und gegenüber der Umgebung im Wesentlichen abgeschlossen ist,
dadurch gekennzeichnet, dass in dem Behandlungsraum (2, 2`) ein Teig-Strukturierungsabschnitt (4, 4', 4") mit einerden Strömungsquerschnitt verringernden Düse (6, 6', 6") zum Strukturieren des Teiges angeordnet ist,
und dass stromabwärts von der Düse (6, 6', 6") der Strömungsquerschnitt in dem Teig-Strukturierungsabschnitt gegenüber dem verringerten Strömungsquerschnitt im Bereich der Düse (6, 6`, 6") wieder erweitert ist.

Ausführungsbeispiel 2. Teig-Behandlungseinheit (1, 1') nach Ausführungsbeispiel 1, dadurch gekennzeichnet, dass die Düse (6, 6', 6") in Abhängigkeit von der Qualität des zu behandelnden Teiges ausgebildet ist, den den Behandlungsraum passierenden Teig zu strukturieren/restrukturieren.

Ausführungsbeispiel 3. Teig-Behandlungseinheit (1, 1') nach Ausführungsbeispiel 1 oder 2,
dadurch gekennzeichnet, dass die Düse (6, 6', 6") eine zentrale Durchtrittsöffnung (14, 14`) aufweist, die in Strömungsrichtung des Teiges zumindest abschnittsweise entlang des Teig-Strukturierungsabschnitts (4, 4', 4") einen gleichbleibenden Strömungsquerschnitt aufweist.

Ausführungsbeispiel 4. Teig-Behandlungseinheit (1, 1') nach Ausführungsbeispiel 1, 2 oder 3,
dadurch gekennzeichnet, dass die zentrale Durchtrittsöffnung (14, 14`) einen im Wesentlichen kreisförmigen Querschnitt mit einer Mittelachse aufweist, die koaxial zur Längsachse der Gehäusewandung des Gehäuses (8, 8', 8") angeordnet ist, wobei vorzugsweise das Gehäuse eine im Wesentlichen rotationssymmetrische Form aufweist.

Ausführungsbeispiel 5. Teig-Behandlungseinheit (1, 1') nach Ausführungsbeispiel 4, dadurch gekennzeichnet, dass die Düse (6, 6', 6") eine Durchtrittsöffnung (14, 14`) mit einem Durchmesser aufweist, der zum Durchmesser der Gehäusewandung vor und/oder nach dem Teigstrukturierungsabschnitt (4, 4', 4") ein Verhältnis hat, das im Bereich von ungefähr 1:3 bis etwa 1:12 liegt.

Ausführungsbeispiel6. Teig-Behandlungseinheit (1, 1') nach einem der vorstehenden Ausführungsbeispiele,
dadurch gekennzeichnet, dass der Teig-Strukturierungsabschnitt (4, 4`, 4") stromaufwärts der Durchtrittsöffnung (14, 14') einen sich in Strömungsrichtung kontinuierlich verringernden Strömungsquerschnitt aufweist.

Ausführungsbeispiel 7. Teig-Behandlungseinheit (1, 1') nach Ausführungsbeispiel 6, dadurch gekennzeichnet, dass der sich in Strömungsrichtung kontinuierlich verringernde Strömungsquerschnitt als ein sich konisch verjüngender Eintrittskegel (20) ausgebildet ist.

Ausführungsbeispiel 8. Teig-Behandlungseinheit (1, 1') nach Ausführungsbeispiel 7, dadurch gekennzeichnet, dass der Eintrittskegel (20) einen Kegelwinkel (α) im Bereich von etwa 100° bis 120° aufweist.

Ausführungsbeispiel 9. Teig-Behandlungseinheit (1, 1') nach einem der vorstehenden Ausführungsbeispiele,
der Teig-Strukturierungsabschnitt (4, 4', 4") stromabwärts von der Düse (6, 6`, 6") einen sich in Strömungsrichtung kontinuierlich erweiternden Strömungsquerschnitt aufweist.

Ausführungsbeispiel 10. Teig-Behandlungseinheit (1, 1') nach Ausführungsbeispiel 9, dadurch gekennzeichnet, dass der sich in Strömungsrichtung kontinuierlich erweiternde Strömungsquerschnitt als ein sich konisch erweiternder Austrittskegel (22) ausgebildet ist.

Ausführungsbeispiel 11. Teig-Behandlungseinheit (1, 1') nach Ausführungsbeispiel 10, dadurch gekennzeichnet, dass der Austrittskegel (22) einen Kegelwinkel (β) im Bereich von etwa 115° bis 135° aufweist.

Ausführungsbeispiel 12. Teig-Behandlungseinheit (1, 1') nach einem der Ausführungsbeispiele 7 bis 11,
dadurch gekennzeichnet, dass der Kegelwinkel (β) am Austrittskegel (22) im Vergleich zum Kegelwinkel (α) am Eintrittskegel (20) ein größeres Winkelmaß aufweist.

Ausführungsbeispiel 13. Teig-Behandlungseinheit (1, 1') nach einem der vorstehenden Ausführungsbeispiele,
dadurch gekennzeichnet, dass stromabwärts von dem Teig-Strukturierungsabschnitt (4, 4', 4") ein im Wesentlichen zylindrischer Raum anschließt, welcher vorzugsweise zum Portionieren des Teiges ausgebildet ist.

Ausführungsbeispiel 14. Teig-Behandlungseinheit (1, 1') nach einem der vorstehenden Ausführungsbeispiele,
dadurch gekennzeichnet, dass die Länge des Behandlungsraumes (2, 2`) und die Länge der Düse (6, 6', 6") in einem Verhältnis von 4:1 stehen.

Ausführungsbeispiel 15. Teig-Behandlungseinheit (1, 1') nach einem der vorstehenden Ausführungsbeispiele,
dadurch gekennzeichnet, dass die Düse (6`) einstückig mit wenigstens einem Teil des Gehäuses (8`) der Behandlungseinheit (1) ausgebildet ist.

Ausführungsbeispiel 16. Teig-Behandlungseinheit (1, 1') nach einem der vorstehenden Ausführungsbeispiele,
dadurch gekennzeichnet, dass der Teig-Strukturierungsabschnitt (4, 4") mit der Düse (6, 6") als separates Bauteil ausgebildet und in einem Abschnitt des Behandlungsraumes (2, 2`) austauschbar angeordnet ist.

Ausführungsbeispiel 17. Vorrichtung (100, 100`) zum Verarbeiten von Teig, aufweisend eine Füllmaschine (102) zum Fördern von Teig, die einen Fülltrichter (104) zum Aufnehmen von Teig und eine Förderpumpe (114) zum Fördern des Teigs umfasst,
dadurch gekennzeichnet, dass die Füllmaschine (100, 100`) mit einer stromabwärts von der Förderpumpe (114) angeordneten Teig-Behandlungseinheit (1, 1') nach einem der vorstehenden Ausführungsbeispiele 1 bis 16 gekoppelt ist.

Ausführungsbeispiel 18. Vorrichtung (100, 100`) nach Ausführungsbeispiel 17,
mit einer Teig-Zugabeöffnung (108), einer Teig-Ausgabeöffnung (112, 112`) und einer sich zwischen der Zugabeöffnung (108) und der Ausgabeöffnung (112, 112`) erstreckenden, gegenüber der Umgebung im Wesentlichen geschlossenen Verarbeitungsstrecke (116, 116`).

Ausführungsbeispiel 19. Vorrichtung (100, 100`) nach Ausführungsbeispiel 17 oder 18, mit einer Portioniervorrichtung (110, 110) zum Unterteilen des die Verarbeitungsstrecke (116, 116`) passierenden Teiges in einzelne Portionen oder in mehrere gleichgroße Massenströme, wobei die Teig-Behandlungseinheit (1, 1') vorzugsweise unmittelbar vor oder hinter der Portioniervorrichtung (110, 110`) und/oder einem Füllstromteiler (124) angeordnet ist.

Ausführungsbeispiel 20. Vorrichtung (100, 100`) nach Ausführungsbeispiel 18, gekennzeichnet durch mindestens eine Zugabestelle in der Verarbeitungsstrecke (116, 116`) für in den zu behandelnden Teig einzugebende Zusätze.

Ausführungsbeispiel 21. Vorrichtung (100, 100`) nach Ausführungsbeispiel 17 bis 20, dadurch gekennzeichnet, dass die Portioniervorrichtung (110, 110') eine Trenneinrichtung (120) zum Unterteilen des Lebensmittels in Einzelportionen umfasst, wobei die Trenneinrichtung (122) vorzugsweise mindestens ein bewegbares Messer aufweist.

Ausführungsbeispiel 22. Verfahren zum Verarbeiten von Teig, umfassend die Schritte
- Einbringen eines Teiges in eine Teig-Zugabeöffnung (108) einer im Wesentlichen geschlossenen Verarbeitungsstrecke (116, 116`),
- Fördern des Teiges in der Verarbeitungsstrecke (116, 116`) mittels einer Füllmaschine (102) in Richtung einer Teig-Ausgabeöffnung (112, 112`),
wobei der Teig eine Behandlungseinheit (1, 1') durchläuft, welche in Förderrichtung des Teiges hinter der Füllmaschine (102) angeordnet ist, und
- Behandeln des Teiges in der Behandlungseinheit (1, 1') mittels Hindurchleiten des Teiges durch einen Teig-Strukturierungsabschnitt (4, 4', 4") mit einer den Strömungsquerschnitt verringernden Düse (6, 6', 6") zum Strukturieren des Teiges.

Ausführungsbeispiel 23. Verfahren nach Ausführungsbeispiel 22, umfassend einen, mehrere oder sämtliche der nachfolgenden Schritte;
- Behandeln des Teiges durch gleichzeitiges mechanisches Beanspruchen des Teiges in mehrere Richtungen,
- anschließendes Erweitern des Strömungsquerschnitts beim Hindurchleiten durch die Düse (6, 6', 6"), und
- Portionieren des Teiges vor oder nach dem Behandeln des Teiges mittels einer Portioniervorrichtung (110, 110`).

Ausführungsbeispiel 24. Verwendung einer Düse (6, 6', 6") in einer Teig-Behandlungseinheit (1,1') nach einem der Ausführungsbeispiele 1 bis 13 zum Strukturieren/Restrukturieren eines Teiges.

### Bezugszeichenliste

- 1, 1': Teig-Behandlungseinheit
- 2, 2`: Behandlungsraum
- 4, 4`, 4": Teig-Strukturierungsabschnitt
- 6, 6', 6": Düse
- 8, 8', 8": Gehäuse
- 10, 10': Einlass
- 12, 12': Auslass
- 14, 14`: Durchtrittsöffnung
- 16, 16`: Eintritt
- 18, 18': Austritt
- 20, 20': Eintrittskegel
- 22, 22': Austrittkegel
- α, β: Kegelwinkel
- 100, 100`: Vorrichtung
- 102: Füllmaschine
- 104: Fülltrichter
- 106: Gehäuse
- 108: Zugabeöffnung
- 110, 110': Portioniervorrichtung
- 112, 112`: Ausgabeöffnung
- 113: Rahmengestell
- 114: Förderpumpe
- 116, 116`: Verarbeitungsstrecke
- 118: Abschnitt
- 120: Trenneinrichtung
- 122: Trennmesser
- 124: Füllstromteiler
- 126: Verbindungsleitung
- 128: Füllmaschinenanschluss
- 130: Verteilerleitung
- 132: Ausgabeleitung
- 134: Auslassbereich
- L: Längsache

## Patentansprüche

1. Vorrichtung (100, 100`) zum Verarbeiten von Teig, aufweisend
eine Füllmaschine (102) zum Fördern von Teig, die einen Fülltrichter (104) zum Aufnehmen von Teig und eine Förderpumpe (114) zum Fördern des Teigs umfasst,
wobei die Füllmaschine (100, 100`) mit einer stromabwärts von der Förderpumpe (114) angeordneten Teig-Behandlungseinheit (1, 1') zum Behandeln von Teig gekoppelt ist,
welche ein Gehäuse (8, 8`, 8"),
einen Teig-Einlass (10, 10`) zum Einleiten von Teig in das Gehäuse (8, 8`, 8"),
einen Teig-Auslass (12, 12`) zum Ausgeben des Teiges aus dem Gehäuse (8, 8`, 8"),
einen Behandlungsraum zum Behandeln des Teiges aufweist, welcher innerhalb des Gehäuses (8, 8`, 8") entlang eines Abschnitts zwischen dem Einlass und dem Auslass angeordnet und gegenüber der Umgebung im Wesentlichen abgeschlossen ist, und
eine Portioniervorrichtung (110, 110') zum Unterteilen des die Verarbeitungsstrecke (116, 116') passierenden Teiges in einzelne Portionen oder in mehrere gleichgroße Massenströme,
wobei in dem Behandlungsraum (2, 2`) ein Teig-Strukturierungsabschnitt (4, 4', 4") mit einer den Strömungsquerschnitt verringernden Düse (6, 6', 6") zum Strukturieren des Teiges angeordnet ist,
und stromabwärts von der Düse (6, 6', 6") der Strömungsquerschnitt in dem Teig-Strukturierungsabschnitt gegenüber dem verringerten Strömungsquerschnitt im Bereich der Düse (6, 6`, 6") wieder erweitert ist,
**dadurch gekennzeichnet, dass**
die Teig-Behandlungseinheit (1, 1') unmittelbar hinter der Portioniervorrichtung (110, 110') angeordnet ist.

2. Vorrichtung (100, 100`) nach Anspruch 1,
**dadurch gekennzeichnet, dass** die Düse (6, 6', 6") in Abhängigkeit von der Qualität des zu behandelnden Teiges ausgebildet ist, den den Behandlungsraum passierenden Teig zu strukturieren/restrukturieren,
wobei die Düse (6, 6`, 6") bevorzugt eine zentrale Durchtrittsöffnung (14, 14`) aufweist, die in Strömungsrichtung des Teiges zumindest abschnittsweise entlang des Teig-Strukturierungsabschnitts (4, 4', 4") einen gleichbleibenden Strömungsquerschnitt aufweist.

3. Vorrichtung (100, 100`) nach Anspruch 1 oder 2,
**dadurch gekennzeichnet, dass** der Teig-Strukturierungsabschnitt (4, 4`, 4") stromaufwärts der Durchtrittsöffnung (14, 14') einen sich in Strömungsrichtung kontinuierlich verringernden Strömungsquerschnitt aufweist,
wobei der sich in Strömungsrichtung kontinuierlich verringernde Strömungsquerschnitt bevorzugt als ein sich konisch verjüngender Eintrittskegel (20) ausgebildet ist,
wobei der Eintrittskegel (20) vorzugsweise einen Kegelwinkel (α) im Bereich von etwa 100° bis 120° aufweist.

4. Vorrichtung (100, 100`) nach einem der vorstehenden Ansprüche,
der Teig-Strukturierungsabschnitt (4, 4', 4") stromabwärts von der Düse (6, 6`, 6") einen sich in Strömungsrichtung kontinuierlich erweiternden Strömungsquerschnitt aufweist, wobei der sich in Strömungsrichtung kontinuierlich erweiternde Strömungsquerschnitt bevorzugt als ein sich konisch erweiternder Austrittskegel (22) ausgebildet ist,
wobei der Austrittskegel (22) vorzugsweise einen Kegelwinkel (β) im Bereich von etwa 115° bis 135° aufweist.

5. Vorrichtung (100, 100`) nach einem der Ansprüche 2 und 3,
**dadurch gekennzeichnet, dass** der Kegelwinkel (β) am Austrittskegel (22) im Vergleich zum Kegelwinkel (α) am Eintrittskegel (20) ein größeres Winkelmaß aufweist.

6. Vorrichtung (100, 100`) nach einem der vorstehenden Ansprüche,
**dadurch gekennzeichnet, dass** stromabwärts von dem Teig-Strukturierungsabschnitt (4, 4', 4") ein im Wesentlichen zylindrischer Raum anschließt, welcher vorzugsweise zum Portionieren des Teiges ausgebildet ist,
wobei die Länge des Behandlungsraumes (2, 2`) und die Länge der Düse (6, 6', 6") in einem Verhältnis von 4:1 stehen.

7. Vorrichtung (100, 100`) nach einem der vorstehenden Ansprüche,
**dadurch gekennzeichnet, dass** in dem Behandlungsraum (2, 2`) stromabwärts der Düse (6, 6', 6") zusätzlich mindestens eine Schikane für den in Richtung des Teig-Auslasses (12, 12`) geförderten Teig angeordnet ist, welche vorzugsweise wiederum unmittelbar eine Querschnittserweiterung nachgeschaltet ist.

8. Vorrichtung (100, 100`) nach Anspruch 7,
wobei die Schikane(n) so ausgebildet und angeordnet ist/sind, dass der Behandlungsraum (2, 2`) mindestens einen Streckenabschnitt mit einem variierenden Strömungsquerschnitt und/oder einer sich ändernden Förderrichtung für den Teig aufweist.

9. Vorrichtung (100, 100`) nach einem der vorstehenden Ansprüche,
**dadurch gekennzeichnet, dass** die Düse (6`) einstückig mit wenigstens einem Teil des Gehäuses (8`) der Behandlungseinheit (1) ausgebildet ist,
oder der Teig-Strukturierungsabschnitt (4, 4") mit der Düse (6, 6") als separates Bauteil ausgebildet und in einem Abschnitt des Behandlungsraumes (2, 2`) austauschbar angeordnet ist.

10. Vorrichtung (100, 100`) nach einem der Ansprüche 1 bis 9,
mit einer Teig-Zugabeöffnung (108), einer Teig-Ausgabeöffnung (112, 112`) und einer sich zwischen der Zugabeöffnung (108) und der Ausgabeöffnung (112, 112`) erstreckenden, gegenüber der Umgebung im Wesentlichen geschlossenen Verarbeitungsstrecke (116, 116`),
und/oder
einer dem Teig-Auslass der Teig-Behandlungseinheit zugeordneten Trenneinrichtung (120) zum Unterteilen des Teiges in Einzelportionen.

11. Vorrichtung (100, 100`) nach einem der Ansprüche 1 bis 10,
wobei die Portioniervorrichtung (110, 110`) eine Trenneinrichtung (120) zum Unterteilen des Lebensmittels in Einzelportionen umfasst, wobei die Trenneinrichtung (120) vorzugsweise mindestens ein bewegbares Messer (122) aufweist.

12. Vorrichtung (100, 100`) nach Anspruch 10,
**gekennzeichnet durch** mindestens eine Zugabestelle in der Verarbeitungsstrecke (116, 116`) für in den zu behandelnden Teig einzugebende Zusätze.

13. Verfahren zum Verarbeiten von Teig, umfassend die Schritte
- Einbringen eines Teiges in eine Teig-Zugabeöffnung (108) einer im Wesentlichen geschlossenen Verarbeitungsstrecke (116, 116`),
- Fördern des Teiges in der Verarbeitungsstrecke (116, 116`) mittels einer Füllmaschine (102) in Richtung einer Teig-Ausgabeöffnung (112, 112`),
wobei der Teig eine Behandlungseinheit (1, 1') durchläuft, welche in Förderrichtung des Teiges hinter der Füllmaschine (102) angeordnet ist, und
- Behandeln des Teiges in der Behandlungseinheit (1, 1') mittels Hindurchleiten des Teiges durch einen Teig-Strukturierungsabschnitt (4, 4', 4") mit einer den Strömungsquerschnitt verringernden Düse (6, 6', 6") zum Strukturieren des Teiges,
- anschließendes Erweitern des Strömungsquerschnitts beim Hindurchleiten durch die Düse (6, 6', 6"), **gekennzeichnet durch** den Schritt:
- Portionieren des Teiges vor dem Behandeln des Teiges mittels einer Portioniervorrichtung (110, 110`).

14. Verfahren nach Anspruch 13, umfassend den nachfolgenden Schritt;
- Behandeln des Teiges durch gleichzeitiges mechanisches Beanspruchen des Teiges in mehrere Richtungen.

## Claims

1. Apparatus (100, 100') for processing dough comprising
a filling machine (102) for the delivery of dough, that includes a filling hopper (104) for receiving the dough and a delivery pump (114) for delivery of the dough,
wherein the filling machine (100, 100') is coupled to a dough handling unit (1, 1'), that is arranged downstream of the delivery pump (114). for handling dough, comprising
a housing (8, 8', 8"),
a dough inlet (10, 10') for introducing dough into the housing (8, 8', 8"),
a dough outlet (12, 12') for discharge of the dough from the housing (8, 8', 8"), and
a handling chamber for handling the dough, that is arranged within the housing (8, 8', 8") along a portion between the inlet and the outlet and is substantially closed off relative to the surroundings, and
a portioning device (110, 110') for subdividing the dough passing the processing section (116, 116') into individual portions or into a plurality of same-size mass flows,
wherein arranged in the handling chamber (2, 2') is a dough structuring portion (4, 4', 4") having a nozzle (6, 6', 6") which reduces the flow cross-section for structuring of the dough, and
downstream of the nozzle (6, 6', 6") the flow cross-section in the dough structuring portion is enlarged again in relation to the reduced flow cross-section in the region of the nozzle (6, 6', 6"),
**characterised in that** the dough handling unit (1, 1') is arranged immediately after the portioning device (110, 110').

2. Apparatus (100, 100') as set forth in claim 1
**characterised in that** the nozzle (6, 6', 6") is adapted to structure/restructure the dough passing the handling chamber in dependence on the quality of the dough to be handled,
wherein the nozzle (6, 6', 6") preferably has a central passage opening (14, 14') which is of a uniform flow cross-section in the flow direction of the dough at least portion-wise along the dough structuring portion (4, 4', 4").

3. Apparatus (100, 100') as set forth in claims 1 or 2
**characterised in that** upstream of the passage opening (14, 14') the dough structuring portion (4, 4', 4") is of a flow cross-section which continuously decreases in the flow direction,
wherein the flow cross-section which continuously decreases in the flow direction is preferably in the form of a conically tapering entry cone (20),
wherein the entry cone (20) preferably has a cone angle (α) in the range of about 100° to 120°.

4. Apparatus (100, 100') as set forth in one of the preceding claims
**characterised in that** the dough structuring portion (4, 4', 4") downstream of the nozzle (6, 6', 6") is of a flow cross-section which continuously enlarges in the flow direction,
wherein the flow cross-section which continuously enlarges in the flow direction is preferably in the form of a conically enlarging exit cone (22),
wherein the exit cone (22) preferably has a cone angle (β) in the range of about 115° to 135°.

5. Apparatus (100, 100') as set forth in one of claims 2 and 3
**characterised in that** the cone angle (β) at the exit cone (22) is of a larger angle dimension in comparison with the cone angle (α) at the entry cone (20).

6. Apparatus (100, 100') as set forth in one of the preceding claims
**characterised in that** downstream of the dough structuring portion (4, 4', 4") is an adjoining substantially cylindrical space which is preferably adapted for portioning of the dough,
wherein the length of the handling chamber (2, 2') and the length of the nozzle (6, 6', 6") are in a ratio of 4:1 .

7. Apparatus (100, 100') as set forth in one of the preceding claims,
**characterised in that** at least one baffle for the dough being delivered in the direction of the dough outlet (12, 12') is additionally arranged in the handling chamber (2, 2') downstream of the nozzle (6, 6', 6"), said baffle preferably being connected immediately downstream of an increase in cross-section.

8. Apparatus (100, 100') as set forth in claim 7
wherein the baffle(s) is/are designed and arranged in such a way that the handling chamber (2, 2') has at least one path section with a varying flow cross-section and/or with a changing delivery direction of the dough.

9. Apparatus (100, 100') as set forth in one of the preceding claims
**characterised in that** the nozzle (6') is integral with at least a part of the housing (8') of the handling unit (1),
or the dough structuring portion (4, 4") with the nozzle (6, 6") is in the form of a separate component and is replaceably arranged in a portion of the handling chamber (2, 2').

10. Apparatus (100, 100') as set forth in one of the claims 1 to 9 comprising
a dough feed opening (108), a dough discharge opening (112, 112') and a processing section (116, 116') which extends between the feed opening (108) and the discharge opening (112, 112') and which is substantially closed in relation to the surroundings,
and/or
a separating device (120) for subdividing the foodstuff into individual portions, which is associated the dough outlet of the dough handling unit.

11. Apparatus (100, 100') as set forth in one of the claims 1 to 10
wherein the portioning device (110, 110') preferably includes a separating device (120) for subdividing the foodstuff into individual portions, wherein the separating device (120) preferably has at least one moveable blade (122).

12. Apparatus (100, 100') as set forth in claim 10
**characterised by** at least one feed location in the processing section (116, 116') for additives to be added to the dough to be handled.

13. A method of processing dough including the steps
- introducing a dough into a dough feed opening (108) of a substantially closed processing section (116, 116'),
- delivering the dough in the processing section (116, 116') by means of a filling machine (102) in the direction of a dough discharge opening (112, 112'),
wherein the dough passes through a handling unit (1, 1') which is arranged after the filling machine (102) in the delivery direction of the dough, and
- handling of the dough in the handling unit (1, 1') by passing the dough through a dough structuring portion (4, 4', 4") with a nozzle (6, 6', 6") reducing the flow cross-section for structuring of the dough,
- then enlarging the flow cross-section when passing through the nozzle (6, 6', 6"),
**characterized by** the step:
- portioning of the dough before handling of the dough by means of a portioning device (110, 110').

14. A method as set forth in claim 13 including the following step:
- handling the dough by simultaneous mechanical stressing of the dough in a plurality of directions.

## Revendications

1. Dispositif (100, 100') destiné à transformer de la pâte, présentant
une machine de remplissage (102) destinée à refouler de la pâte, qui comprend une trémie de remplissage (104) destinée à recevoir de la pâte et une pompe de refoulement (114) destinée à refouler de la pâte,
dans lequel la machine de remplissage (100, 100') est couplée à une unité de traitement de pâte (1, 1') disposée en aval de la pompe de refoulement (114), destinée à traiter de la pâte,
laquelle présente un boîtier (8, 8', 8"),
une entrée de pâte (10, 10') destinée à introduire de la pâte dans le boîtier (8, 8', 8''),
une sortie de pâte (12, 12') destinée à distribuer la pâte hors du boîtier (8, 8', 8"),
un espace de traitement destiné à traiter la pâte, lequel est disposé à l'intérieur du boîtier (8, 8', 8") le long d'une section entre l'entrée et la sortie et est sensiblement fermée par rapport à l'environnement, et
un dispositif de mise en portions (110, 110') destiné à diviser la pâte traversant la ligne de transformation (116, 116') en portions individuelles ou en plusieurs débits massiques de même taille,
dans lequel une section de structuration de pâte (4, 4', 4") avec une buse (6, 6', 6") réduisant la section transversale d'écoulement, destinée à structurer la pâte est disposée dans l'espace de traitement (2, 2'),
et la section transversale d'écoulement est à nouveau élargie dans la zone de la buse (6, 6', 6") par rapport à la section transversale d'écoulement réduite dans la section de structuration de pâte en aval de la buse (6, 6', 6''),
**caractérisé en ce que**
l'unité de traitement de pâte (1, 1') est disposée directement derrière le dispositif de mise en portions (110, 110').

2. Dispositif (100, 100') selon la revendication 1,
**caractérisé en ce que** la buse (6, 6', 6") est réalisée en fonction de la qualité de la pâte à traiter pour structurer/restructurer la pâte traversant l'espace de traitement,
dans lequel la buse (6, 6', 6") présente de manière préférée une ouverture de passage (14, 14') centrale, qui présente une section transversale d'écoulement constante au moins par endroits le long de la section de structuration de pâte (4, 4', 4") dans la direction d'écoulement de la pâte.

3. Dispositif (100, 100') selon la revendication 1 ou 2,
**caractérisé en ce que** la section de structuration de pâte (4, 4', 4") présente, en amont de l'ouverture de passage (14, 14'), une section transversale d'écoulement se réduisant en continu dans la direction d'écoulement,
dans lequel la section transversale d'écoulement se réduisant en continu dans la direction d'écoulement est réalisée de manière préférée en tant qu'un cône d'entrée (20) se réduisant de manière conique,
dans lequel le cône d'entrée (20) présente de préférence un angle conique (α) dans la plage d'environ 100° à 120°.

4. Dispositif (100, 100') selon l'une quelconque des revendications précédentes,
dans lequel la section de structuration de pâte (4, 4', 4") présente, en aval de la buse (6, 6', 6''), une section transversale d'écoulement s'élargissant en continu dans la direction d'écoulement,
dans lequel la section transversale d'écoulement s'élargissant en continu dans la direction d'écoulement est réalisée de manière préférée en tant qu'un cône de sortie (22) s'élargissant de manière conique,
dans lequel le cône de sortie (22) présente de préférence un angle conique (β) dans la plage d'environ 115° à 135°.

5. Dispositif (100, 100') selon l'une quelconque des revendications 2 et 3,
**caractérisé en ce que** l'angle conique (β) présente sur le cône de sortie (22) en comparaison avec l'angle conique (α) sur le cône d'entrée (20) une mesure angulaire plus grande.

6. Dispositif (100, 100') selon l'une quelconque des revendications précédentes,
**caractérisé en ce que** se trouve dans le prolongement en aval de la section de structuration de pâte (4, 4', 4") un espace sensiblement cylindrique, lequel est réalisé de préférence pour mettre en portions la pâte,
dans lequel le rapport entre la longueur de l'espace de traitement (2, 2') et la longueur de la buse (6, 6', 6") est de 4:1.

7. Dispositif (100, 100') selon l'une quelconque des revendications précédentes,
**caractérisé en ce qu'**en supplément au moins une chicane pour la pâte refoulée en direction de la sortie de pâte (12, 12') est disposée dans l'espace de traitement (2, 2') en aval de la buse (6, 6', 6"), en aval de laquelle est monté de préférence à nouveau directement un élargissement de section transversale.

8. Dispositif (100, 100') selon la revendication 7,
dans lequel la/les chicane(s) est/sont réalisée(s) de telle sorte que l'espace de traitement (2, 2') présente au moins une section de ligne avec une section transversale d'écoulement variable et/ou une direction de refoulement changeante pour la pâte.

9. Dispositif (100, 100') selon l'une quelconque des revendications précédentes,
**caractérisé en ce que** la buse (6') est réalisée d'un seul tenant avec au moins une partie du boîtier (8') de l'unité de traitement (1),
ou la section de structuration de pâte (4, 4") est réalisée avec la buse (6, 6") en tant que composant séparé et est disposée de manière à pouvoir être remplacée dans une section de l'espace de traitement (2,2').

10. Dispositif (100, 100') selon l'une quelconque des revendications 1 à 9,
avec une ouverture d'ajout de pâte (108), une ouverture de distribution de pâte (112, 112') et une ligne de transformation (116, 116') sensiblement fermée par rapport à l'environnement, s'étendant entre l'ouverture d'ajout (108) et l'ouverture de distribution (112, 112'),
et/ou
un système de séparation (120) associé à la sortie de pâte de l'unité de traitement de pâte, destiné à diviser la pâte en portions individuelles.

11. Dispositif (100, 100') selon l'une quelconque des revendications 1 à 10,
dans lequel le dispositif de mise en portions (110, 110') comprend un système de séparation (120) destiné à diviser le produit alimentaire en portions individuelles, dans lequel le système de séparation (120) présente de préférence au moins un couteau (122) pouvant être déplacé.

12. Dispositif (100, 100') selon la revendication 10,
**caractérisé par** au moins un emplacement d'ajout dans la ligne de transformation (116, 116') pour des additifs à intégrer dans la pâte à traiter.

13. Procédé destiné à transformer de la pâte, comprenant les étapes
- d'introduction d'une pâte dans une ouverture d'ajout de pâte (108) d'une ligne de transformation (116, 116') sensiblement fermée,
- de refoulement de la pâte dans la ligne de transformation (116, 116') au moyen d'une machine de remplissage (102) en direction d'une ouverture de distribution de pâte (112, 112'),
dans lequel la pâte traverse une unité de traitement (1, 1'), laquelle est disposée derrière la machine de remplissage (102) dans la direction de refoulement de la pâte, et
- de traitement de la pâte dans l'unité de traitement (1, 1') au moyen d'un acheminement de la pâte à travers la section de structuration de pâte (4, 4', 4") de part en part avec une buse (6, 6', 6'') réduisant la section transversale d'écoulement pour structurer la pâte,
- d'élargissement par la suite de la section transversale d'écoulement lors de l'acheminement à travers la buse (6, 6', 6''), **caractérisé par** l'étape :
- de mise en portions de la pâte avant le traitement de la pâte au moyen d'un dispositif de mise en portions (110, 110').

14. Procédé selon la revendication 13, comprenant l'étape suivante :
- de traitement de la pâte en sollicitant mécaniquement de manière simultanée la pâte dans plusieurs directions.
